# EUROPEAN PATENT APPLICATION

(11) **EP 1 048 395 A2**
(43) Date of publication of application: **02.11.2000**
(21) Application number: 00850072.0
(22) Date of filing: 20.04.2000
(51) Int. Cl.: B23Q 1/50, B23Q 3/18, B23Q 5/34, B24B 5/18

(54) **Machining tool device**

(30) Priority: 26.04.1999 SV 9901484
(71) Applicant: Lidköping Machine Tools AB, S-531 19 Lidköping (SE)
(72) Inventor: Pettersson, Ake, S-531 41 Lidköping (SV)

(57) **Abstract**

The present invention relates to a machining tool device with a shaft (12) supporting a tool (13). According to the invention the shaft (12) is carried by a linkage comprising at least two arms (R1,R2) extending in planes parallel to each other, said arms being pivotable around axles perpendicular to said parallel planes with the aid of torque motors (16,17), wherewith the shaft is movable along an arbitrary curve in a plane parallel with the planes in which the arms extend.

## Description

### TECHNICAL FIELD

The present invention relates to a machining tool device with a shaft supporting a tool.

### BACKGROUND TO THE INVENTION

In machining tool devices it is often desirable to have the tool movable towards the work piece along an arbitrary curve. In order to accomplish this, the tool is often supported by sliding elements movable in directions perpendicular to each other. However, the bearings for the slides of such elements must have a good quality and be well protected from the environment in order to ensure a good precision in the positioning of the tool and a long life of the tool steering mechanism. A steering mechanism for tools comprising slides will therefore be relatively expensive and require a lot of maintenance work.

There is therefore a need for a steering mechanism for the tool of a machining tool device in which the tool is movable towards the work piece along an arbitrary curve by a steering mechanism without sliding elements.

The object of the present invention is to fulfil this need.

### SUMMARY OF THE INVENTION

This object is achieved by a machining tool device with a shaft supporting a tool, characterised in that the shaft is carried by a linkage comprising at least two arms extending in planes parallel to each other, said arms being pivotable around axles perpendicular to said parallel planes with the aid of torque motors, wherewith the shaft is movable along an arbitrary curve in a plane parallel with the planes in which the arms extend.

In a preferred embodiment said shaft is supported by one end of a first arm, the other end of the first arm being pivotally connected to one end of a second arm having its other end pivotally connected to a base plate of the machining tool device, the pivotal connections consisting of torque motors. In one alternative said shaft is supported in both ends by a pair of first and second arms and carries a tool between its ends and in another said shaft is supported by a single pair of first and second arms. The torque motors are preferably individually controlled. The tool can be a rotating tool, for example a grinding wheel, and the first arm(s) supports a motor for rotating the tool.

In another preferred embodiment the device comprises a first and second torque motor, each of the torque motor have a housing supporting a rotatable circular cover plate driven by the motor, in that the housing of the first torque motor is fixed to the cover plate of the second torque motor with its rotation axis being eccentrically disposed relative to the rotation axis of the second torque motor, and that the shaft is eccentrically attached to the cover plate of the first torque motor, whereby the first and second arms are constituted by the cover plates of the respective torque motor. Furthermore, can the shaft be attached to the cover plate of the first torque motor via a third torque motor and a tool holder, the tool holder being rotable around the rotating axis of the third torque motor.

### BRIEF DESCRIPTION OF THE DRAWING

The present invention will now be described with reference to the enclosed figures, of which
Fig. 1 shows schematic front view of a centerless circular grinding machine according to a first embodiment of the invention, and
Figs. 2 and 3 show a perspective and a plan view, respectively of a second embodiment of the invention.

### DESCRIPTION OF EMBODIMENTS OF THE INVENTION

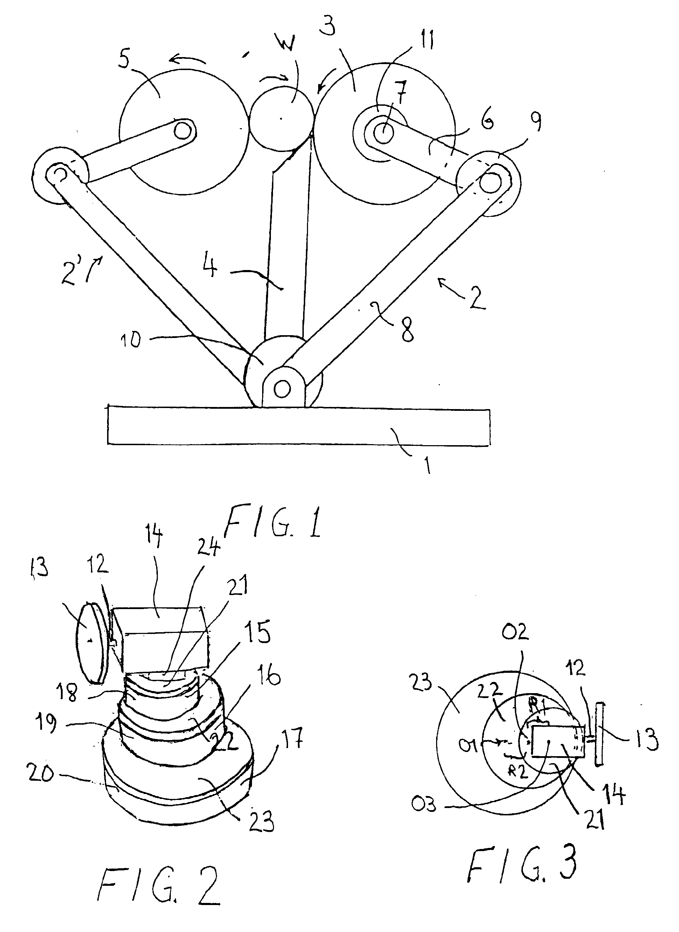

Fig. 1 schematically discloses a centerless circular grinding machine according to a preferred embodiment of the invention. This machine includes a base plate 1 supporting a linkage 2 carrying a grinding wheel 3 and a work piece support 4. A regulating wheel 5 rotatable by a motor (not shown in the Figure) is supported by a similar linkage 2'.

The linkage 2 consists of a first arm 6 which in a first end carries a shaft 7 supporting the grinding wheel 3, and a second arm 8 which in its ends is pivotally connected to the first arm and the base plate, respectively. The pivoting movements of the first and second arms are controlled by torque motors 9 and 10. The grinding wheel 3 is driven by a motor 11. The linkage 2' has an identical construction as linkage 2.

The motors for controlling the movements of the linkages 2,2'and thereby the grinding wheel and the regulating wheel are torque motors, for example DME0530.0703VE from Etel SA, Switzerland.

The centerless circular grinding machine disclosed in Figure 1 works in the following way.

A work piece W is placed upon the support 4 and rests on this support and the regulating wheel 5. Thereafter the motors for driving the regulating wheel 5 and the grinding wheel 3 are actuated. The regulating wheel and the grinding wheel are driven in the same rotational direction, the peripheral speed of the grinding wheel being much grater than the peripheral speed of the regulating wheel. Thereby the work piece lying between the regulating and the grinding wheel will also rotate in the opposite rotational direction. The functioning of the regulating wheel is to brake the rotational movement of the work piece so that there will be a difference between the peripheral speeds of the grinding wheel and the work piece. This difference defines the cutting speed of the grinding wheel.

In order to ensure a good quality of the grinding the mutual positions of the regulating wheel, the work piece and the grinding wheel is of utmost importance. The centre of the work piece W must lie above a straight line between the centres of the grinding wheel 3 and the regulating wheel 5. By having these wheels movable in both a vertical and a horizontal direction this can be accomplished regardless of the diameter of the work piece. The manoeuvring of the motors is preferably computer controlled.

In the disclosed embodiment, the grinding wheel 3 and the regulating wheel 5 each are supported by a single linkage 2 and 2', respectively. However, in an alternative the shafts of the grinding wheel and the regulating wheel are supported by such a linkage in both their ends. Such an arrangement is useful if the wheels have a relatively large width. Furthermore, such an arrangement makes it possible to press the wheels against the work piece with a slight inclination in relation to the axis of the work piece, of course under the provision that the connections between the first arms in the respective pairs of linkages and the wheel shafts permits such movements. The motors in the linkages supporting the respective ends of the tool carrying shaft must be individually controlled in order to make it possible to move one linkage differently from the opposite linkage. This possibility of incline the tool axis in relation to the axis of the work piece can sometimes be useful.

In Figures 2 and 3 a second embodiment of the invention is shown. In this embodiment a shaft 12 rotably supporting a grinding wheel 13 is driven by an electric motor 14. The motor 14 is in turn supported by three torque motors 15,16,17. Each of the motors 15,16,17 comprises a housing 18,19 and 20, respectively, each of the housings comprising a cover plate 21,22 and 23, respectively which is supported by the housing rotable around the respective rotation axle 03, O2 and O1, respectively. The motor 16 is eccentrically fixed to the cover plate 23 of the motor 17, the rotation axles 01,02 of motors 17 and 16 being distanced from each other by a distance R2, said distance defining a pivot arm corresponding to the second arm 8 in the embodiment shown in Figure 1. The motor 15 is eccentrically fixed to the cover plate 22 of the motor 16, the rotation axles 02,03 of motors 16,15 being distanced from each other by a distance R1, said distance defining a pivot arm corresponding to the first arm 6 in the embodiment shown in Figure 1. The motor 14 is fixed to the rotable cover plate 21 of the motor 15 by a tool holder 24 fixed to the centre of the cover plate 21.

In such a device, the shaft 12 is movable along an arbitrary curve in a horizontal plane. However, due to the compact construction of this device only relatively small movements of the shaft is possible. Such a device is suitable for grinding of work pieces which are to be given an irregular shape, for example an undulated surface.

In the device in Figures 2 and 3 the torque motors are disposed in horizontal planes. However, the housing 20 of motor 17 could of course be fixed to a vertical or inclined support, thereby enabling the grinding of work pieces having irregular surfaces in any plane desired.

The described linkages for supporting a shaft of a tool can be used in all kinds of machining tool devices, for example in lathes or milling machines. The invention should therefore only be limited by the enclosed patent claims.

## Claims

1. A machining tool device with a shaft (7;12) supporting a tool (3;13), **characterised in** that the shaft (7;12) is carried by a linkage comprising at least two arms (6,7;R1,R2) extending in planes parallel to each other, said arms being pivotable around axles perpendicular to said parallel planes with the aid of torque motors (9,10;16,17), wherewith the shaft is movable along an arbitrary curve in a plane parallel with the planes in which the arms extend.

2. The machining tool device according to Claim 1, **characterised in** that said shaft (7) is supported by one end of a first arm (6), the other end of the first arm being pivotally connected to one end of a second arm (8) having its other end pivotally connected to a base plate (1) of the machining tool device, the pivotal connections consisting of torque motors (9,10).

3. The machining tool device according to Claim 2, **characterised in** that said shaft (7) is supported by a single pair of first and second arms (6,8) and carries a tool (3) in one of its ends.

4. The machining device according to Claim 2, **characterised in** that said shaft is supported in both ends by a pair of first and second arms and carries a tool between its ends.

5. The machining tool device according to any one of Claims 1-4, **characterised in** that the torque motors (9,10;16,17) are individually controlled.

6. The machine tool device according to any one of claims 1-5, **characterised in** that the tool is a rotating tool (3) and the first arm(s) (6) supports a motor for rotating the tool.

7. The machining tool device according to Claim 6, **characterised in** that the tool is a grinding wheel.

8. The machining tool device according to Claim 1, **characterised in** that the device comprises a first and second torque motor (16,17), each of the torque motors have a housing (19,20) supporting a rotable circular cover plate (22,23) driven by the motor, in that the housing (19) of the first torque motor (16) is fixed to the cover plate (23) of the second torque motor (17) with its rotation axis (02) being eccentrically disposed relative to the rotation axis (O1) of the second torque motor (17), and that the shaft (12) is eccentrically attached to the cover plate (22) of the first torque motor (16), whereby the first and second arms are constituted by the cover plates of the respective torque motor.

9. The machining tool according to Claim 8, **characterised in** that the shaft (12) being attached to the cover plate (22) of the first torque motor (16) via a third torque motor (15) and a tool holder (24), the tool holder (24) being rotable around the rotating axis (03) of the third torque motor (15).
